# EUROPÄISCHE PATENTANMELDUNG

(11) **EP 3 522 543 A1**
(43) Veröffentlichungstag der Anmeldung: **07.08.2019**
(21) Anmeldenummer: 19401001.3
(22) Anmeldetag: 11.01.2019
(51) Int. Cl.: H04N 21/41, H05B 37/02, G06T 7/90, G05D 25/02, G09G 5/02

(54) **STEUEREINRICHTUNG SOWIE ANORDNUNG ZUM BETREIBEN EINER HEIMAUTOMATION**

(30) Priorität: 31.01.2018 DE 102018102125
(71) Anmelder: TechniSat Dresden GmbH, 01139 Dresden (DE); TechniSat Digital GmbH, 54550 Daun (DE)
(72) Erfinder: Willert, Marc, 01156 Dresden (DE)

(57) **Zusammenfassung**

Die Erfindung betrifft eine Steuereinrichtung (2) zum Betreiben einer Heimautomation sowie eine Anordnung (1) zum Betreiben einer Heimautomation mit jeweils mindestens einem Sensor (3) sowie Aktor (4).

Die Steuereinrichtung (2) ist eingerichtet, einen von einem ersten Sensor (5) bereitgestellten Farbwert (15) beim Betreiben der Heimautomation derart zu verarbeiten, dass die Steuereinrichtung (2) den Farbwert (15) einem Aktor (4) bereitstellt.

Die Anordnung (1) weist die Steuereinrichtung (2) auf und ferner einen ersten Sensor (5) zum Erheben und zum Bereitstellen von Sensordaten (14), wobei der erste Sensor (5) eingerichtet ist, erste Bilddaten (7) beim Erheben der Sensordaten (14) zu verwenden, aus den ersten Bilddaten (7) mindestens einen Farbwert (15) zu ermitteln sowie in den Sensordaten (14) den mindestens einen Farbwert (15) der Steuereinrichtung (2) bereitzustellen

## Beschreibung

Die Erfindung betrifft eine Steuereinrichtung zum Betreiben einer Heimautomation sowie eine Anordnung zum Betreiben einer Heimautomation mit jeweils mindestens einem Sensor sowie Aktor. Das Einsatzgebiet, die Heimautomation befasst sich zunächst mit Sensoren, die verschiedenste Umgebungsparameter erfassen können wie beispielsweise Bewegung, Windgeschwindigkeit/-richtung, Temperatur uvm. Ferner lassen sich mittels vielfältiger Aktoren beispielsweise Rollläden an Fenstern sowie Thermostatventile an Heizkörpern öffnen und schließen. Die hierfür erforderliche Logik stellt üblicherweise eine Steuereinrichtung bereit.

Heimautomation wird auch als Haussteuerung (engl. "SmartHome") bezeichnet. Eine Heimautomation weist regelmäßig eine erste zentrale Einheit auf, die hier als Steuereinrichtung bezeichnet wird. Es können auch zentrale Einheiten vorgesehen sein die hierarchisch miteinander gekoppelt sind. Gekoppelt sind mit einer Zentraleinheit auch Komponenten, wie Sensoren und Aktoren. Diese Kopplungen sind üblicherweise als drahtlose Verbindungen ausgeführt. Die Komponenten können für einen autonomen Betrieb eingerichtet sein und sowohl die Mittel zur drahtlosen Kommunikation sowie eine autonome Energieversorgung aufweisen (z.B. Batterie o.ä.). Ferner weisen solche Komponenten minimal Bedienelemente auf wie beispielsweise lediglich einen Taster.

Die Daten, die die Sensoren mittels der drahtlosen Kommunikation der Steuereinrichtung bereitstellen (Datenübertragung), werden hier als Sensordaten bezeichnet.

Die Komponenten könne platzsparend ausgebildet sein. Aus der WO 2015/040144 A1 ist beispielsweise ein Detektor bekannt, der signalisiert ob ein Fenster geöffnet oder geschlossen ist. Der Detektor ist derart flach ausgeführt, dass sich dieser zwischen Fenster und dessen Rahmen anordnen lässt.

Es sind diverse Komponenten bekannt, die unterschiedliche Funktionen von Detektoren und/oder Sensoren aufweisen. Mit diesen Funktionen lassen sich Zustände wie Dämmerung/Licht, Temperatur, Wind (-stärke/-richtung), Bewegung usw. detektieren. Ferner kann eine Komponente als Aktor fungieren und beispielweise einen Schalter in einer Steckdose betätigen. Ein Aktor kann auch ein Leuchtmittel sein, dass so eingestellt wird, dass es in einer eingestellten Farbe, Helligkeit und/oder mit einer Farbtemperatur leuchtet.

Die drahtlose Kommunikation bietet die Möglichkeit der flexiblen Ortswahl bei der Installation der Komponenten. Die drahtlose Kommunikation kann für kurze Distanzen ausgebildet sein (bis ungefähr 100-200 m; ggf. 300 m). Es sind Lösungen bekannt, die mittels WLAN (IEEE 802.11) kommunizieren. Andere nutzen DECT oder ITU-T G.9959. Mittels der Kommunikation lässt sich eine Komponente mit einer Steuereinrichtung koppeln. Mit anderen Worten wird bei der Heimautomation ein Netzwerk ausgebildet.

In der Steuereinrichtung fließen die Informationen oder Daten zusammen, die die Komponenten bereitstellen. In selbiger lassen sich verschiedene Auswertungen vornehmen und Szenarien anlegen, mittels derer Aktoren betätigt werden z.B. für das Betätigen von Rollläden, Verschattungen, Berieselungen, Beleuchtungen, Heizungen usw. Mit anderen Worten stellt die Steuereinrichtung einen überwiegenden Teil der Logik bereit, die für die Heimautomation benötigt wird. Die Sensoren liefern Eingangswerte und die Aktoren reagieren auf Kommandos.

Bezüglich der Kommunikation, dem Liefern von Eingangswerten und dem Ausgeben von Kommandos haben sich bereits technische Lösungen etabliert, die hier unter dem Begriff des Protokolls oder des Übertragungsprotokolls zusammengefasst werden. Solche Protokolle heißen z.B. "REST-API", "ZigBee" und "Z-Wave ®". Der Fachwelt der Heimautomation sind diese Begriffe geläufig. Für den Anwender der Heimautomation ist lediglich beachtlich, dass er-dem Protokoll nach- zu seiner Steuereinrichtung passende Komponenten verwendet. Der Vorteil der genannten Protokolle ist, dass diese eine Art Norm oder Standard vorgeben, sodass es für die Steuereinrichtung nur maßgeblich ist, dass eine Komponente den Standard unterstützt oder nicht.

Auf der Seite der Steuereinrichtung stellt das Protokoll eine Schnittstelle (API=engl. "application interface") für angrenzende Software bereit. So lassen sich mittels dieser Schnittstelle und Programmierwerkzeugen Funktionen schaffen, die der Steuereinrichtung ein logisches Verhalten verleihen. Dieses logische Verhalten ist zumeist so angelegt, dass einem Bediener zwar weitestgehend entgegengekommen wird, dieser aber die entscheidenden Einstellungen noch selbst vornehmen oder ändern kann. Zu diesem Zweck wird dem Bediener üblicherweise eine Bedienoberfläche bereitgestellt.

Bezüglich der entscheidenden Einstellungen folgen nunmehr Beispiele. Im ersten Fall soll auf die Dämmerung reagiert werden mittels eines Dämmerungssensors (Sensor) und mindestens eines Rollladens (Aktor). Die Komponenten sind Bestandteile der Heimautomation und ließen sich mittels der Bedienoberfläche koppeln. Allerdings ist die Frage, in welchem Zustand der Dämmerung (Helligkeit) der Rollladen schließen oder öffnen soll. Möglicherweise soll das abends und morgens unterschiedlich sein. D.h., dass der Bediener letztlich in der Lage ist oder sein sollte hier eine Feinabstimmung vorzunehmen, auf die es ankommt, damit seinen Bedürfnissen entsprochen wird. In einem anderen Fall geht es um eines elektrisches Heizgerät, das mittels eines Temperatursensors gesteuert werden soll. Hier könnte eine schaltbare Steckdose zum Einsatz kommen. Neben der Einstellung der Umschalttemperaturen (z.B. zwei aufgrund der zu bevorzugenden Schalt-Hysterese) kann der Bediener möglicherweise das Schaltverhalten wählen, ggf. aus vorgegebenen. In einem letzten Fall soll in eine Steuerung der untertägige Stand und Neigungswinkel der Sonne einfließen, der sich unter Hinzunahme von Datum, Uhrzeit und ggf. des Standortes bestimmen lässt. Aus den Beispielen lässt sich entnehmen, dass Schwellwerte eine Rolle spielen, aber auch Funktionen die eine Logik bereitstellen (z.B. Schalthysterese, Kalender) und die ggf. auf Datenbanken oder auf Schnittstellen im Internet zurückgreifen können.

Bezüglich der Kategorie von Sensoren (Temperatur, Dämmerung usw.) ist bereits ein breites Spektrum vorhanden. Im Anwendungsgebiet der Heimautomation sind bislang solche Sensoren, die Farbwerte liefern, offensichtlich nicht bekannt. Zumindest ist keine Schnittstelle für eingehende Farbwerte bekannt. Ein Farbwert kann indes so verstanden werden, dass dieser die Information eines grafischen Bildpunktes beinhalten soll oder zumindest Anteile dieser Information. Die Information soll über das hinausgehen, was derzeit Sensoren für Dämmerung/Licht liefern können. Es geht auch darum, der Steuereinrichtung mindestens eine Information bereitzustellen, die derzeit offensichtlich noch keine Anwendung gefunden hat. Dieses Bereitstellen geht mit dem Schaffen einer Schnittstelle für mindestens einen Farbwert einher.

Es kann als eine Aufgabe der Erfindung angesehen werden, die im Stand der Technik identifizierte Lücke zu schließen beziehungsweise die Nachteile des Standes der Technik zu überwinden.

Es wird eine Vorrichtung, nämlich eine Steuereinrichtung gemäß Anspruch 1 vorgeschlagen, ferner eine Anordnung gemäß Anspruch 2 sowie ein Verfahren gemäß Anspruch 10. In den abhängigen Ansprüchen sind Ausführungsformen der aufgezeigten Ausgestaltungen dargestellt.

Gemäß einer ersten Ausgestaltung ist eine Vorrichtung vorgeschlagen, nämlich eine Steuereinrichtung zum Betreiben einer Heimautomation mit jeweils mindestens einem Sensor sowie Aktor. Die Steuereinrichtung ist eingerichtet, einen von einem ersten Sensor bereitgestellten Farbwert beim Betreiben der Heimautomation derart zu verarbeiten, dass die Steuereinrichtung den Farbwert einem Aktor bereitstellt.

Gemäß einer weiteren Ausgestaltung ist eine Anordnung vorgeschlagen zum Betreiben einer Heimautomation mit jeweils mindestens einem Sensor sowie Aktor. Die Anordnung weist eine oben beschriebene Steuereinrichtung auf und ferner einen ersten Sensor zum Erheben und zum Bereitstellen von Sensordaten, wobei der erste Sensor eingerichtet ist, erste Bilddaten beim Erheben der Sensordaten zu verwenden, aus den ersten Bilddaten mindestens einen Farbwert zu ermitteln sowie in den Sensordaten den mindestens einen Farbwert der Steuereinrichtung bereitzustellen.

Gemäß einer Ausführungsform der Anordnung weist selbige einen Bildempfänger auf, wobei der Bildempfänger eine Kamera ist, wobei der Bildempfänger den ersten Sensor aufweist und wobei der Bildempfänger eingerichtet ist, die ersten Bilddaten bereitzustellen.

Gemäß einer Ausführungsform der Anordnung weist selbige einen Bildempfänger auf, wobei der Bildempfänger eine Empfangseinrichtung ist zum Empfangen von Medieninhalten und zum Bereitstellen von zweiten Bilddaten, die zweiten Bilddaten zum Wiedergeben auf einer Wiedergabefläche, wobei der Bildempfänger den ersten Sensor aufweist, wobei der Bildempfänger eingerichtet ist, die ersten Bilddaten bereitzustellen.

Gemäß einer Ausführungsform der Anordnung ist mindestens ein Bildsektor gebildet, wobei ein Bildsektor jeweils, einer Aufteilung entsprechend, aus den ersten Bilddaten vollständig, aus einer Teilmenge der ersten Bilddaten und/oder aus mehreren Teilmengen der ersten Bilddaten gebildet ist, wobei einem Bildsektor jeweils ein Farbwert sowie ein Ortswert zugeordnet ist, wobei der erste Sensor eingerichtet ist, zu dem Bildsektor den Farbwert sowie den Ortswert der Steuereinrichtung in den Sensordaten bereitzustellen.

Gemäß einer Ausführungsform der Anordnung weist der Farbwert eine Angabe zur Farbdarstellung hinsichtlich Farbton, eine Angabe zur Helligkeit und/oder eine Angabe zur Farbtemperatur auf.

Gemäß einer Ausführungsform der Anordnung ist die Steuereinrichtung eingerichtet, mindestens eine erste Kopplung derart auszubilden, dass mindestes einem Aktor der Farbwert eines Bildsektors mittels dessen Ortswert zugeordnet ist.

Gemäß einer Ausführungsform der Anordnung ist die Steuereinrichtung zum Einrichten der Heimautomation indem eingerichtet, dass selbige eine Bedienoberfläche aufweist zum Ausbilden der ersten Kopplung.

Gemäß einer Ausführungsform der Anordnung ist die Steuereinrichtung und die Empfangseinrichtung als ein Gerät indem ausgeführt, dass beide ein gemeinsames Gehäuse aufweisen, wobei die Steuereinrichtung mit der Empfangseinrichtung und somit mit dem ersten Sensor der Empfangseinrichtung über eine zweite Kopplung nicht drahtlos, sondern drahtgebunden gekoppelt ist.

Gemäß einer weiteren Ausgestaltung ist ein Verfahren zum Verwenden einer oben beschriebenen Anordnung vorgeschlagen, wobei die ersten Bilddaten in Form von Videodaten in einem Speicher des Bildempfängers bereitgestellt werden und wobei mittels der Steuereinrichtung, mittels der gebildeten Bildsektoren sowie mittels der mindestens einen ersten Kopplung, den Aktoren, die vorzugsweise Leuchtmittel sind, jeweils ein Farbwert bereitgestellt und somit bewirkt wird, dass bei einer Wiedergabe der Videodaten, nämlich der zweiten Bilddaten auf einer Wiedergabefläche der farbige Eindruck der Wiedergabefläche und/oder von Bildsektoren der über Wiedergabefläche selbige hinaus expandiert zur Anzeige gebracht wird mittels der Aktoren.

Es folgen in den kommenden Ausführungsbeispielen Erläuterungen zu den technischen Zusammenhängen und Hinweise zu möglichen Vorteilen.

Der grundsätzliche Vorteil der aufgezeigten Lösung könnte darin gesehen werden, dass für das Einsatzgebiet der Heimautomation eine weitere Kategorie von Sensoren erschlossen oder gefunden wurde. Diese Kategorie der Sensoren, die Farbwerte, Farbinformation, Lichtparameter in die Heimautomation einbringen können, ermöglicht es zum Beispiel, Lichtsignale, ggf. Feuer oder einfache Gegenstände zu identifizieren. Denkbar ist zum Beispiel auch einen vereinfachten Bildeindruck von außen in einem Innenraum eines Gebäudes (Raum, Zimmer) entstehen zu lassen.

Technisch vorteilhaft könnte dabei sein, dass den ersten Bilddaten dezentral (mittels des ersten Sensors) solche (Farb-)Werte entnommen werden, die die Steuereinrichtung derzeit verarbeiten kann, wobei die (drahtlose) Kopplung verhältnismäßig gering ("sparsam") beansprucht wird.

Nachfolgend wird die Erfindung anhand von Ausführungsbeispielen und zugehörigen Zeichnungen erläutert. Hierzu zeigen:
- Fig. 1: Anordnung mit Steuereinrichtung, Sensoren und Aktoren
- Fig. 2: Anordnung mit Sensoren in Bildempfängern
- Fig. 3: Anordnung zum Betreiben des Verfahrens

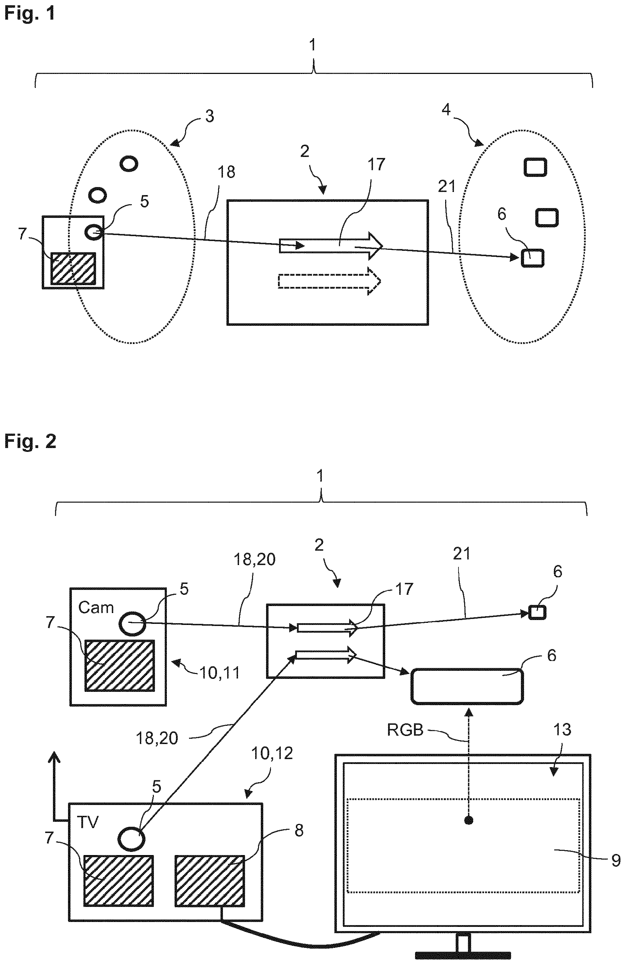

In der **Fig. 1** ist beispielhaft eine Anordnung 1 mit einer Steuereinrichtung 2, mit Sensoren 3 und Aktoren 4 gezeigt. Bei der Steuereinrichtung 2 handelt es sich um eine zentrale Komponente (in engl. "master") einer Heimautomation (in engl. "smart home"). Es wurde als Beispiel für einen Aktor 4 ein Leuchtmittel 6 gewählt. Es kommen hier z.B. Aktoren 4 in Frage, die eine farbigen Eindruck hervorrufen können. D.h. neben den herkömmlichen lichterzeugenden Mitteln (LED uvm.) kommen auch solche in Betracht, die neben dem Effekt der Emission (z.B. Glimmen, Leuchtstoff, Plasma) auf den der Lichtreflektion oder auf einen angrenzenden Effekt basieren.

Moderne Leuchtmittel 6 wie LED-Leuchten sind für flächige Anwendungen vergleichsweise preiswert. Ferner lassen sich diese in der Wiedergabe steuern. Das betrifft nicht nur die Farbe hinsichtlich Farbton (RGB; gemäß Farbskala/-palette), sondern auch die Helligkeit (in Lux) und ggf. die Farbtemperatur (in Kelvin). In der Praxis könnte das Leuchtmittel 6 ein flaches kachelförmiges Leuchtmodul sein, das ggf. mit anderen Leuchtmodulen gekoppelt werden kann. Das Ergebnis könnte eine flächige Leuchte von ca. 1 qm (oder mehr) sein. Es bietet sich an, dass das Leuchtmittel 6 eine autonome Strom-/Spannungsversorgung aufweist. Derartig Leuchtmittel 6 sind handelsüblich.

Einer dritten Kopplung 21 kommt die Aufgabe zu, dem Leuchtmittel 6 die Daten zum Einstellen der farbigen Wiedergabe bereitzustellen. Solche Lösungen für die Heimautomation sind bekannt. Solche dritten Kopplungen 21 sind zumeist drahtlos ausgebildet (WLAN, "Bluetooth", DECT, ITU-T G.9959) und es kommen diverse Übertragungsprotokolle zum Einsatz ("REST-API", "ZigBee", "Z-Wave" usw.). Hinsichtlich der Daten zum Einstellen der farbigen Wiedergabe wird lediglich beispielhaft auf die einschlägige Spezifikation von Z-Wave verwiesen ("Z-WAVE; Z-Wave Application Command Class Specification"; Software Design Specification; SDS13781-5; Kapitel 4.19 ff (Color Switch Command Class) sowie bezüglich Helligkeit Kapitel 4.58 ff (Multilevel Switch Command Class,) [vgl. http://zwavepublic.com/specifications]). Mit anderen Worten kann eine handelsübliche Steuereinrichtung 2 bereits in der Lage sein, Leuchtmittel 6 deren Wiedergabe betreffend mittels der dritten Kopplung 21 einzustellen. Eine solche Steuereinrichtung 2 verfügt dann (zumindest intern) über hierfür nutzbare Schnittstellen (API, Software).

Dem entgegen geht der hier aufgezeigte Lösungsvorschlag davon aus, dass eine handelsübliche Steuereinrichtung 2 keine (Software-)schnittstellen aufweist, über die Farbwerte 15 von Sensoren 3 bereitgestellt werden. Ein Teil der vorgeschlagenen Lösung ist, dass ein erster Sensor 5 (sog. Farbdetektor oder Farbsensor) einen Farbwert 15 bereitstellt, wobei dieser Farbwert 15 zumindest einen der einschlägigen Parameter wie Helligkeit, Farbton (RGB) und/oder Farbtemperatur aufweisen kann. Der Farbwert wird folglich ein in Bits und Bytes verpackter "Wert" sein, in der Art, wie es bei der Codierung von Bildpixeln der Fall ist. Bei der ersten Kopplung 18, über die der Steuereinrichtung 2 der Farbwert 15 bereitgestellt wird, können erneut solche Verfahren zum Einsatz kommen, wie sie bereits allgemein zur Übertragung von Daten (Datenübertragung) zwischen Sensoren 3 und Steuereinrichtung 2 Verwendung finden. Es wird auf die vorhergehende Beschreibung zur Datenübertragung zwischen Steuereinrichtung 2 und Aktoren 4 verwiesen. Diese Datenübertragung kann sich insofern von der zwischen Sensoren 3 und Steuereinrichtung 2 unterscheiden, dass eine Steuereinrichtung 2 unterschiedliche Protokolle und unterschiedliche drahtlose Kommunikationen unterstützen kann. Beachtlich ist, dass nunmehr der erste Sensor 5 in den Sensordaten der Steuereinrichtung 2 mindestens einen Farbwert 15 bereitstellt.

Ferner ist vorgesehen, dass der erste Sensor 5 den Farbwert 15 erhebt, d.h. den Farbwert 15 aus ersten Bilddaten 7 ermittelt. Der Gegenstand der Bilddaten 7 könnte erklärungsbedürftig sein, denn es ist die Rede vom Bereitstellen und Verwenden, was Vorhalten und auch übertragen meinen kann. Unter Bilddaten 7 kann ein Speicher (z.B. RAM) verstanden werden, der Videodaten enthält. Videodaten setzen sich üblicherweise aus Pixeldaten, wobei den einzelnen Pixeldaten eine Position zur Darstellung zugeordnet ist und die Pixeldaten Bit-codierte Farbinformation (RGB + Helligkeit) enthalten. Gelegentlich ist auch von Farbtiefe die Rede (z.B. 8 Bit oder 10 Bit). Sofern der erste Sensor 5 die ersten Bilddaten 7 zum Erheben des Farbwertes verwendet, greift er beispielsweise auf den besagten Speicher zu und liest Pixeldaten, um ggf. einen Mittelwert oder diverse Mittelwerte zu bilden (RGB, Helligkeit einzeln). Alternativ könnte der Speicher -beziehungsweise das den Speicher verwaltende Element- in der Lage sein, ein sog. Histogramm auszuliefern. Aus einem solchen Histogramm ließe sich -mit wenig Aufwand- ein Farbwert 15 bilden.

Anhand der **Fig. 2** soll veranschaulicht werden, dass es für den ersten Sensor 5 unterschiedliche Einsatzmöglichkeiten gibt, d.h. unterschiedliche Ausführungsformen der Anordnung 1. Unterschiedlich ist dahingehend zu sehen, dass zwar zwei Bildempfänger 10 vorgesehen sind, wovon einer eine Kamera 11 ("Cam") und der andere eine Empfangseinrichtung 12 ("TV") ist. Sowohl die Kamera 11 als auch Empfangseinrichtung 12 weisen erste Bilddaten 7 auf, auf die es ankommt. Der erste Sensor 5 ist eingerichtet, Farbwerte 15 aus den ersten Bilddaten 7 zu erheben. Es geht beim Zweck der Idee auch darum, einem konturenscharfen Bild (Foto, Video, Webcam) so etwas wie eine Kerninformation zu entnehmen und diese Kerninformation (Farbwert 15) wiederzugeben (mittels Leuchtmittel 6).

Hierzu ein erläuterndes Beispiel. Als erster Sensor 5 soll eine Kamera 11 dienen, beziehungsweise der erste Sensor 5 ist in eine Kamera 11 integriert. Die Kamera 11 ist auf ein Garagentor gerichtet und zudem auf eine Position, an der eine Lichthupe eines vor der Garage stehenden Pkw auftreffen würde. Die Lichthupe zeichnet sich durch eine besondere Helligkeit aus, die die Kamera 11 sowie deren erster Sensor 5 detektieren könnte. Den bisherigen Beispielen nach käme zunächst lediglich ein Leuchtmittel 6 in Betracht, dass z.B. weißes Licht in der Helligkeit wiedergibt, wie sie der erste Sensor 5 in dem Farbwert 15 liefern würde. Bei der Heimautomation beruht ein Teil der Logik darauf, dass Schwellwerte verwendet werden und dass die Schwellwerte, die sich auf die Sensordaten 14 beziehen, die Sensoren 3 bereitstellen. In dem Beispiel könnte zwar der erste Sensor 5 Sensordaten 14 zu Helligkeiten liefern, aber die Steuereinrichtung 2 könnte auch in der Lage sein, die Lichthupe zu detektieren und in Folge einen Aktor 4 zu betätigen, der kein Leuchtmittel, sondern ein Rollladen oder ein Garagentor ist. Denkbar wäre, eine Sequenz von Lichthupen (3x kurz) zu erkennen.

Das aufgezeigte Beispiel macht deutlich, dass es im Grunde auf den Farbwertes 15 in den Sensordaten 14 ankommt, bereitgestellt von einem ersten Sensor 5 mittels einer Datenübertragung, wobei der erste Sensor 5 in eine Topologie/Infrastruktur eines Netzwerkes zur Heimautomation eingebunden ist. Mit der Ergänzung, den Farbwert 15 aus ersten Bilddaten 7 zu erheben, erstreckt sich das Feld der Verwendung auf diverse technische Mittel, die Bilddaten aufweisen. Darunter fallen Geräte mit Displays, Geräte mit Kamerafunktion, Geräte in den Bilddaten gespeichert werden, wobei neben dem (dynamisch) sog. Bewegtbild (Video, Stream) auch das (statische) Standbild (Foto) eine Rolle spielen kann.

Eine Empfangseinrichtung 12 ("TV") kann folglich einen solchen Sensor 5 aufweisen, der mindestens einen Farbwert 15 in seinen Sensordaten 14 der Steuereinrichtung 2 bereitstellt und das mittels einer zweiten Kopplung 18, die hier als drahtlose Kopplung 20 ausgeführt ist. Eine Empfangseinrichtung 12 kann eine sog. Empfangsbox 22 sein (STB = engl. "set-top-box") aber auch ein TV-Empfänger 23. Im Gegensatz zum TV-Empfänger 23 weist die Empfangsbox keinen Bildschirm mit einer Wiedergabefläche 13 auf, sondern verfügt über einen sog. A/V-Ausgang (i.d.R. HDMI; vormals SCART). Es soll angedeutet sein, dass die zweiten Bilddaten 8 die sind, die über den A/V-Ausgang bereitgestellt werden. Die Differenzierung zwischen ersten Bilddaten 7 und zweiten Bilddaten 8 wurde gewählt, damit z.B. das Einblenden eines Menüs eines sog. OSD (eng. "on screen display") bzgl. der ersten Bilddaten 7 rückwirkungsfrei in den zweiten Bilddaten 8 passieren kann. Angedeutet ist, dass ein Farbwert 15, d.h. z.B. ein mittlerer RGB-Wert eines Bildsektors 9 dem Leuchtmittel 6 (unten) bereitgestellt werden soll.

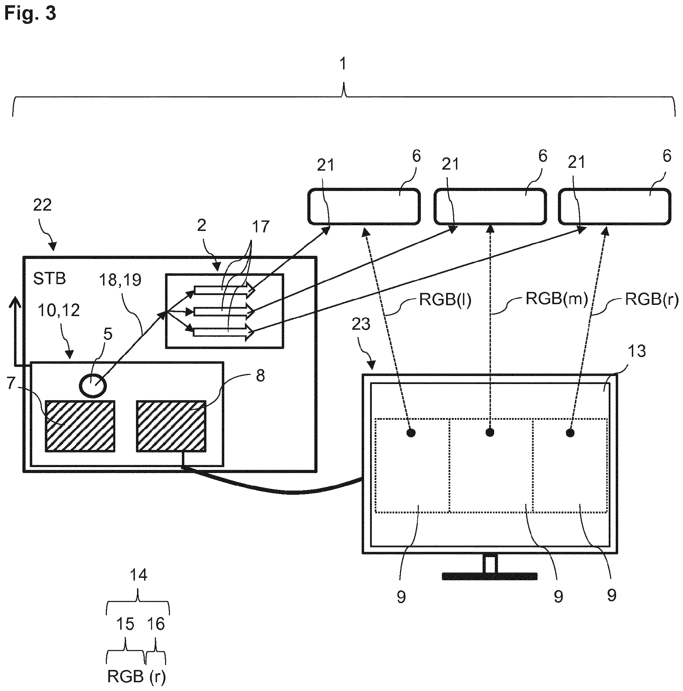

Daran anknüpfend ist in **Fig. 3** Bezug genommen, auf eine beispielhafte Lösung, die sich mit einer Empfangseinrichtung 12 noch eingehender befasst. Wie erwähnt kann mit der Empfangseinrichtung 12 eine STB 22 oder ein TV 23 gemeint sein. Beim TV 23 besteht noch ein Vorteil darin, dass dieser die Information über die aktuell angezeigten Bilddaten hat. Eine STB 22 könnte zwar über erste Bilddaten 7 und über zweite Bilddaten 8 verfügen, die aber nicht zwangsweise auf dem Bildschirm erschein müssen. Insofern kann es von Vorteil sein, dass ein TV 23 einen ersten Sensor 5 aufweist.

Dargestellt ist hier insbesondere, dass die STB 22 und die Steuereinrichtung 2 als ein Gerät ausgeführt sind. Grundsätzlich sprich auch nichts dagegen, in einen TV 23 eine Steuereinrichtung 2 zu integrieren. Sofern die Steuereinrichtung 2 separat aufgestellt ist, kann die zweite Kopplung 18 eine drahtgebundene Kopplung 19 (LAN/Ethernet, TCP/IP) oder eine drahtlose Kopplung 20 (WLAN, TCP/IP) sein. Im Fall der intergierten Lösung bietet sich eine drahtgebundene Kopplung 19 an und ggf. eine gemeinsame Strom-/Spannungsversorgung.

In dem Bespiel liegt ein Fokus auf dem Ortswert 16. Ein Ortswert 16 charakterisiert einen Bildsektor 9. Der erste Sensor 5 kann den Ortswert 16 zusammen mit einen Farbwert 15 (16 und 15 als Sensordatensatz) in den Sensordaten 14 der Steuereinrichtung 2 bereitstellen. Das erscheint sinnvoll, wenn es um eine vergleichsweise große Wiedergabefläche 13 geht (4k), für die die ersten Bilddaten 7 entsprechend umfangreich sind. Wie in dem Verfahren beschrieben, soll im weitesten Sinne die Darstellung/Anzeige auf einer Wiedergabefläche 13 auf die Leuchtmittel 3 "expandiert" werden. Nur als Beispiel würde dann eine angezeigte Flagge Frankreichs (blau/weiß/rot) zur Folge haben, dass die Leuchtmittel 6 jeweils eine dieser Farben und dies in der besagten Reihenfolge anzeigen würden.

Der Ortswert 16 ist dabei ein wesentliches Hilfsmittel insofern, dass mittels der ersten Kopplung 17 der mindestens eine Ortswert 16 mit dem mindestens einem Aktor 4 (Leuchtmittel 6) verknüpft werden kann. Das ist von Vorteil, um z.B. die hausinterne Installation der Leuchtmittel 6 mit dem Aufstellort des TV 23 in Einklang zu bringen. Bezüglich einer hierfür eingerichteten Bedienoberfläche können die (üblichen) Mittel wie HTML-Seiten oder sog. Apps für Mobilgeräte (engl. "smartphones") zur Anwendung kommen.

In dem gezeigten Bespiel sind drei Sektoren vorgesehen, nämlich (l)inks, (m)itte, (r)echts. Die Buchstaben in Klammer (l,m,r) stellen einfache Ortswerte 16 dar. Zusammen mit einem Farbwert 15 (RGB) sind sie in den Sensordaten 14 enthalten oder bilden ggf. die Sensordaten 14. Die Kennzeichnung des Farbwertes 15 (RGB) stellt eine beispielhafte Ausführungsform dar, die so verstanden werden kann, dass der Farbwert 15 lediglich den Farbton (gemäß Farbskala; z.B. RAL) enthält, gekennzeichnet durch einzelne Werte für Rot (R), Grün (G) und Blau (B). Ungeachtet dessen kann der Farbwert 15 so ausgestaltet sein, wie oben beschrieben. Der Begriff des Bildsektors 9 soll besagen, dass dieser einen Bereich oder Ausschnitt aus den ersten Bilddaten 7 zwar kennzeichnet, der Bereich aber auf der Wiedergabefläche 13 nachvollziehbar auszumachen ist. Der Ortswert 16 kann die Funktion einer Kennung (ID, Alias) haben, aber auch solche Koordinaten enthalten, die den Bildsektor 9 repräsentieren. Es lassen sich Sektoren 9 als Rechtecke ausbilden (geradliniges orthogonales Koordinatensystem) oder z.B. als Dreiecke (krummliniges orthogonales Koordinatensystem), wobei Letzteres denkbar ist mit einem Koordinatenursprung in der Mitte am unteren Rand der Wiedergabefläche 13. In dem Fall ließen sich z.B. drei Sektoren bilden durch (gedachte) Trennlinien von Koordinatenursprung zu den beiden Ecken oben links bzw. rechts.

In einem der vorangegangenen Beispiele ging es um das Erkennen einer Lichthupe. Das aufgreifend kann mit dem ersten Sensor 5 in der Kamera 11 eine schlichte Gegenstandserkennung eingerichtet sein, wobei die Kamera 11 auf einen weitestgehend konstant ausgeleuchteten Ort fest ausgerichtet ist. In weiterer Ausprägung kann vorgesehen sein, dass erste Bilddaten 7 von einer Internetkamera (sog. "webcam") oder von einer Überwachungskamera (am Haus oder an der Hausklingel) erfasst und bereitgestellt werden. In Fortführung dieses Gedankens kann es entweder Bildsektoren 9 geben oder demensprechend viele erste Sensoren 5 die jeweils einen Abschnitt des Gesamtbildes repräsentieren. Denkbar ist, eine Überwachung auf einen Abschnitt derart anzulegen, dass z.B. ein Alarm ausgelöst wird, wenn sich der Farb- oder Helligkeitswert abrupt (in 1 sec) ändert um mehr als 5% (oder ähnlich). Der Hintergedanke ist, dass es mühselig ist, permanent eine Überwachungskamera im Blick zu behalten und insbesondere bei Dunkelheit. Freilich gibt es Überwachungssysteme, die Bewegungen und Veränderungen im Bild detektieren können. Aber auch hier schlägt sich der Komfort im Preis nieder. Die Probleme sind dabei in aller Regel nicht die des Bildempfanges, sondern die der Auswertung (Software, Logik). Ab dem Moment, ab dem die vorgeschlagen Lösung mit einer technisch nicht sonderlich hochwertigen Kamera zum Einsatz kommt, verlagert sich der technische Anspruch an die Funktionalität weg von der Kamera hin zur Steuereinrichtung 2. Das hätte noch die angenehme Begleiterscheinung, dass z.B. für die Funktion einer Überwachung nicht zwingend typ-/baugleiche Kameras notwendig sind.

Hier drängt sich der Hinweis auf, dass es Bilddaten geben kann, die unter Einfluss von Infrarotlicht aufgezeichnet wurden (sog. Infrarotbilder). Überwachungskameras weisen Mittel auf zum Erzeugen von Infrarotbildern, d.h. dass mittels einer Tag-/Nacht-Umschaltung (bzgl. Dämmerung) die Kamera nachts sog. aktives Infrarotlicht aussendet, um selbst die Umgebung auszuleuchten. Insofern können auch Wärmebildkameras zum Einsatz kommen. Bezüglich der aufgezeigten Lösung bedeutet das, dass es nicht unerheblich ist, mit Hilfe welcher technischen Mittel die ersten Bilddaten 7 erfasst wurden.

Gemäß einer Ausführungsform der Anordnung weisen die Sensordaten 14 zusätzlich zu dem Farbwert 15 einen Qualitätswert auf, der aussagt, ob es sich bei den ersten Bilddaten 7, die zum Erheben des Farbwertes 15 verwendet wurden, um solche mit einer Qualität wie Foto, Infrarot, Wärmebild, schwarz/weiß usw. handelt.

Es kann sein, dass eine Kamera 11 oder eine Empfangseinrichtung 12 mehrere erste Bilddaten aufweisen. Eine Kamera 11 könnte Bilder z.B. aus vier Richtungen liefern und eine Empfangseinrichtung 12 kann gleichzeitig auch mehrere Programme empfangen (d.h. mehrere erste/zweite Bilddaten).

Gemäß einer Ausführungsform der Anordnung weisen die Sensordaten 14 zusätzlich zu dem Farbwert 15 einen Quellenwert auf, der bei mehreren ersten Bilddaten 7 aussagt, welche der ersten Bilddaten 7 zum Erheben des Farbwertes 15 verwendet wurden.

Es kann sein, dass im Fall von dynamischen ersten Bilddaten 7, nicht jedes Mittel der drahtlosen Übertragung geeignet ist, aufgrund von Nutzungslimitierungen bzgl. der Übertragung. Insofern kann der erste Sensor 5 eingerichtet sein, die Häufigkeit des Bereitstellens der Sensordaten 14 auf ein Intervall zu begrenzen. Alternativ lassen sich die Mittel der drahtlosen Übertragung nutzen, bei denen es keine Nutzungslimitierungen gibt.

Bezüglich einer Verwendung von Leuchtmitteln 6, die zur farbigen Wiedergabe vorgesehen sind, kann in Anlehnung an die aus DE 10 2016 104 570 A1 bekannte Lösung die Steuereinrichtung 2 die Simulation eines laufenden TV 23 bewirken. Darüber hinaus kann ein erster Sensor 5 die Steuereinrichtung 2 derart mit Farbwerten 15 versorgen, dass der erste Sensor 5 die Farbwerte 15 generiert.

Insofern spricht auch nichts dagegen, den ersten Sensor 5 in eine Steuereinrichtung 2 zu integrieren. Eine Steuereinrichtung 2 könnte beispielsweise über erste Bilddaten 7 in Form von besagten statischen und/oder dynamischen Bilddaten verfügen. Wie bereits angedeutet, kann auch ein TV 23 den ersten Sensor 5 aufweisen. Offensichtlich lassen sich vielfältige Verwendungsmöglichkeiten des ersten Sensor 5 finden.

Mit anderen Worten lässt sich eine Ausführungsform wie folgt beschreiben, die zudem eine aus DE 602 04 557 T2 bekannte Lösung aufgreift. Ein Gerät (TV/STB) soll eingerichtet sein, Farb- (z.B. RGB/ Rec. 2020 etc.) und Helligkeitsinformationen des gegenwärtig dargestellten Bildes als "Sensordaten" über eine Schnittstelle an eine Smart Home Zentrale (SHZ) zu liefern. Das dargestellte Bild lässt sich in Quadranten einteilen, so dass der Nutzer in der Lage ist, Lichtquellen auch in Abhängigkeit von ihrer räumlichen Positionierung zum Bildwiedergabegerät zu steuern.

Als einfache Aufteilung wird das gesamte Bild als ein Quadrant verwendet, so dass daraus eine mittlere Farb- und Helligkeitsinformation gewonnen werden kann. Bei der Aufteilung des dargestellten Bildes in mehrere Quadranten werden die Farb- und Helligkeitsinformationen um Positionsinformationen ergänzt, d.h. die vom TV/STB erzeugten "Sensordaten" enthalten neben mittlerer Farbe und Helligkeit auch die Position (oben links, oben Mitte, oben Rechts - Mitte links, Mitte, Mitte rechts - unten links, unten Mitte, unten rechts) des jeweiligen Quadranten.

Eine SHZ empfängt die vom Gerät (TV/STB) erzeugten "Sensordaten" und verwendet sie, um mit der SHZ verbundene Lichtquellen zu steuern. Die anzusteuernden Lichtquellen, sowie die Auswirkung auf die Lichtintensität der angesteuerten Lichtquellen, sind vom Nutzer konfigurierbar. Folgende Installationen sind denkbar:
1) Der Nutzer hat Lichtquellen mit der SHZ verbunden, die sich nur in der Helligkeit regeln lassen. Mögliche Anwendung: Anpassen der Lichtintensität einer Lichtquelle an die Helligkeit des angezeigten Bildes, um das Überstrahlen der Raumbeleuchtung z.B. in dunklen Bildszenen zu minimieren/unterbinden.
2) Der Nutzer hat Lichtquellen mit der SHZ verbunden, die sich in der Helligkeit und Weißton regeln lassen. Mögliche Anwendung: Anpassen der Lichtintensität und des Weißtons einer Lichtquelle an die Helligkeit/Farbtemperatur des angezeigten Bildes.
3) Der Nutzer hat Lichtquellen mit der SHZ verbunden, die sich in Helligkeit und RGB Farbspektrum regeln lassen. Mögliche Anwendung: Anpassen der Lichtintensität und der RGB Farbe einer Lichtquelle an die Helligkeit/Farbwerte des angezeigten Bildes.
4) Mischinstallationen
   Beim Verbinden der Lichtquellen mit der SHZ werden die Eigenschaften der Lichtquelle von der SHZ ermittelt und als Merkmal der Lichtquelle gespeichert. Aus den vom TV/STB gewonnenen Farb- Helligkeits- und Positionsinformationen (Sensordaten) und den für eine anzusteuernde Lichtquelle gespeicherten Merkmale, ermittelt die SHZ die erforderlichen Daten und steuert eine Lichtquelle entsprechend an. Dabei "übersetzt" die SHZ die Steuerdaten in das jeweilige Smart Home Protokoll/Schnittstelle (Z-Wave, Bluetooth, ZigBee, REST-API etc.) der verbundenen Lichtquelle.

Ferner ist vom Nutzer konfigurierbar, welche Lichtquelle durch welche Quadranten des auf dem TV/STB dargestellten Bildes angesteuert werden soll.

### Bezugszeichenliste

- 1: Anordnung / Heimautomation
- 2: Steuereinrichtung
- 3: Sensor / Sensoren
- 4: Aktor / Aktoren
- 5: erster Sensor
- 6: Leuchtmittel
- 7: erste Bilddaten
- 8: zweite Bilddaten
- 9: Bildsektor
- 10: Bildempfänger
- 11: Kamera
- 12: Empfangseinrichtung
- 13: Wiedergabefläche
- 14: Sensordaten
- 15: Farbwert
- 16: Ortswert
- 17: erste Kopplung
- 18: zweite Kopplung
- 19: drahtgebundene Kopplung
- 20: drahtlose Kopplung
- 21: dritte Kopplung
- 22: Empfangsbox / STB
- 23: TV-Empfänger / TV

## Patentansprüche

1. Vorrichtung, nämlich eine Steuereinrichtung (2) zum Betreiben einer Heimautomation mit jeweils mindestens einem Sensor (3) sowie Aktor (4),
wobei die Steuereinrichtung (2) eingerichtet ist, einen von einem ersten Sensor (5) bereitgestellten Farbwert (15) beim Betreiben der Heimautomation derart zu verarbeiten, dass die Steuereinrichtung (2) den Farbwert (15) einem Aktor (4) bereitstellt.

2. Anordnung (1) zum Betreiben einer Heimautomation mit jeweils mindestens einem Sensor (3) sowie Aktor (4),
die Anordnung (1) aufweisend eine Steuereinrichtung (2) gemäß Anspruch 1 und ferner aufweisend einen ersten Sensor (5) zum Erheben und zum Bereitstellen von Sensordaten (14),
wobei der erste Sensor (5) eingerichtet ist,
erste Bilddaten (7) beim Erheben der Sensordaten (14) zu verwenden,
aus den ersten Bilddaten (7) mindestens einen Farbwert (15) zu ermitteln sowie in den Sensordaten (14) den mindestens einen Farbwert (15) der Steuereinrichtung (2) bereitzustellen.

3. Anordnung gemäß Anspruch 1 oder 2,
die Anordnung (1) aufweisend einen Bildempfänger (10),
wobei der Bildempfänger (10) eine Kamera (11) ist,
wobei der Bildempfänger (10) den ersten Sensor (5) aufweist und
wobei der Bildempfänger (10) eingerichtet ist, die ersten Bilddaten (7) bereitzustellen.

4. Anordnung gemäß Anspruch 1 oder 2,
die Anordnung (1) aufweisend einen Bildempfänger (10),
wobei der Bildempfänger (10) eine Empfangseinrichtung (12) ist zum Empfangen von Medieninhalten und zum Bereitstellen von zweiten Bilddaten (8),
die zweiten Bilddaten (8) zum Wiedergeben auf einer Wiedergabefläche (13), wobei der Bildempfänger (10) den ersten Sensor (5) aufweist,
wobei der Bildempfänger (10) eingerichtet ist, die ersten Bilddaten (8) bereitzustellen.

5. Anordnung gemäß einem der Ansprüche 1 bis 4,
wobei mindestens ein Bildsektor (9) gebildet ist,
wobei ein Bildsektor (9) jeweils, einer Aufteilung entsprechend, aus den ersten Bilddaten (7) vollständig, aus einer Teilmenge der ersten Bilddaten (7) und/oder aus mehreren Teilmengen der ersten Bilddaten (7) gebildet ist,
wobei einem Bildsektor (9) jeweils ein Farbwert (15) sowie ein Ortswert (16) zugeordnet ist,
wobei der erste Sensor (5) eingerichtet ist, zu dem Bildsektor (9) den Farbwert (15) sowie den Ortswert (16) der Steuereinrichtung (2) in den Sensordaten (14) bereitzustellen.

6. Anordnung gemäß einem der Ansprüche 1 bis 5,
wobei der Farbwert (15) aufweist eine Angabe zur Farbdarstellung hinsichtlich Farbton, eine Angabe zur Helligkeit und/oder eine Angabe zur Farbtemperatur.

7. Anordnung gemäß einem der vorhergehenden Ansprüche,
wobei die Steuereinrichtung (2) eingerichtet ist,
mindestens eine erste Kopplung (17) derart auszubilden,
dass mindestes einem Aktor (4) der Farbwert (15) eines Bildsektors (9) mittels dessen Ortswert (16) zugeordnet ist.

8. Anordnung gemäß einem der vorhergehenden Ansprüche,
wobei die Steuereinrichtung (2) zum Einrichten der Heimautomation indem eingerichtet ist, dass selbige eine Bedienoberfläche aufweist zum Ausbilden der ersten Kopplung (17).

9. Anordnung gemäß einem der vorhergehenden Ansprüche,
wobei die Steuereinrichtung (2) und die Empfangseinrichtung (12) als ein Gerät (22,23) indem ausgeführt ist, dass beide ein gemeinsames Gehäuse aufweisen,
wobei die Steuereinrichtung (2) mit der Empfangseinrichtung (12) und somit mit dem ersten Sensor (5) der Empfangseinrichtung (12) über eine zweite Kopplung (18) nicht drahtlos (20), sondern drahtgebunden (19) gekoppelt ist.

10. Verfahren zum Verwenden einer Anordnung (1) gemäß einem der vorhergehenden Ansprüche,
wobei die ersten Bilddaten (7) in Form von Videodaten in einem Speicher des Bildempfängers (10) bereitgestellt werden und
wobei mittels der Steuereinrichtung (2), mittels der gebildeten Bildsektoren (9) sowie mittels der mindestens einen ersten Kopplung (17), den Aktoren (4), die vorzugsweise Leuchtmittel (6) sind, jeweils ein Farbwert (15) bereitgestellt und somit bewirkt wird,
dass bei einer Wiedergabe der Videodaten, nämlich der zweiten Bilddaten (8) auf einer Wiedergabefläche (13) der farbige Eindruck der Wiedergabefläche (13) und/oder von Bildsektoren (9) der über Wiedergabefläche (13) selbige hinaus expandiert zur Anzeige gebracht wird mittels der Aktoren (6).
